# EUROPEAN PATENT APPLICATION

(11) **EP 4 541 484 A1**
(43) Date of publication of application: **23.04.2025**
(21) Application number: 22948014.0
(22) Date of filing: 24.06.2022
(51) Int. Cl.: B22F 1/00, B22F 1/05, B22F 10/34, C22C 1/04, C22C 1/10, B22F 10/28

(54) **COPPER ALLOY POWDER FOR ADDITIVE MANUFACTURING, ADDITIVELY MANUFACTURED COPPER ALLOY ARTICLE, AND METHOD FOR MANUFACTURING COPPER ALLOY ADDITIVELY-MANUFACTURED ARTICLE**

(71) Applicant: Fukuda Metal Foil & Powder Co., Ltd., Kyoto 600-8435 (JP)
(72) Inventor: MATSUMOTO Seiichi, Kyoto-shi, Kyoto 607-8305 (JP); SUGITANI Yuji, Kyoto-shi, Kyoto 607-8305 (JP); IMAI Ken, Kyoto-shi, Kyoto 607-8305 (JP); ISHIDA Yu, Kyoto-shi, Kyoto 607-8305 (JP)
(74) Representative: Betten & Resch
(86) International application number: PCT/JP2022/025245
(87) International publication number: WO 2023/248453

(57) **Abstract**

According to the present invention, it is possible to manufacture a high-strength copper alloy additively manufactured product by efficiently generating a Corson alloy containing nickel and silicon. A copper alloy powder for additive manufacturing used to manufacture an additively manufactured product by an additive manufacturing method contains nickel and silicon, a balance is formed from copper and an unavoidable impurity, and a value obtained by dividing the content (wt%) of nickel by the content (wt%) of silicon is not less than 3.3 and not more than 7.2. In a copper alloy additively manufactured product additively manufactured by an additive manufacturing apparatus, a value obtained by dividing the content (wt%) of nickel by the content (wt%) of silicon is not less than 3.3 and not more than 7.2, the copper alloy additively manufactured product contains not less than 1.5 wt% to not more than 6.0 wt% of nickel, not less than 0.35 wt% to not more than 1.5 wt% of silicon, and a balance is formed from copper and an unavoidable impurity.

## Description

### TECHNICAL FIELD

The present invention relates to a copper alloy powder for additive manufacturing, a copper alloy additively manufactured product, and a manufacturing method of the copper alloy additively manufactured product.

### BACKGROUND ART

In the above technical field, patent literature 1 discloses a copper base alloy powder for additive manufacturing, which contains nickel elements and silicon elements in copper.

### CITATION LIST

### PATENT LITERATURE

Patent literature 1: Japanese Patent Laid-Open No. 2021-017639

### SUMMARY OF THE INVENTION

### TECHNICAL PROBLEM

However, the technique described in the above literature does not efficiently generate a Corson alloy containing nickel and silicon, so a high-strength copper alloy additively manufactured product cannot be manufactured.

The present invention enables to provide a technique of solving the above-described problem.

### SOLUTION TO PROBLEM

One example aspect of the invention provides a copper alloy powder for additive manufacturing used to manufacture an additively manufactured product by an additive manufacturing method, wherein
the copper alloy powder contains nickel and silicon, and a balance is formed from copper and an unavoidable impurity, and
a value obtained by dividing a content (wt%) of the nickel by a content (wt%) of the silicon is not less than 3.3 and not more than 7.2.

Another example aspect of the present invention provides a copper alloy additively manufactured product additively manufactured by an additive manufacturing apparatus using the above-described copper alloy powder for additive manufacturing, wherein
a value obtained by dividing a content (wt%) of nickel by a content (wt%) of silicon is not less than 3.3 and not more than 7.2.

Still other example aspect of the present invention provides a manufacturing method of a copper alloy additively manufactured product, comprising:
additively manufacturing a copper alloy additively manufactured product by an additive manufacturing apparatus using the above-described copper alloy powder for additive manufacturing; and
holding the copper alloy additively manufactured product at not less than 450°C to not more than 550°C.

### ADVANTAGEOUS EFFECTS OF INVENTION

According to the present invention, it is possible to manufacture a high-strength copper alloy additively manufactured product by efficiently generating a Corson alloy containing nickel and silicon.

### BRIEF DESCRIPTION OF DRAWINGS

Fig. 1 is a graph showing the characteristics of copper alloy additively manufactured products of Examples 1 to 6 and Comparative Examples 5 to 12;
   Fig. 2 includes graphs each showing the change of the characteristic of each of the copper alloy additively manufactured products of Examples 1 to 6 caused by aging treatment;
   Fig. 3 is a graph showing the characteristics of copper alloy additively manufactured products of Examples 10 to 19;
   Fig. 4 includes graphs each showing the change of the characteristic of each of the copper alloy additively manufactured products of Examples 10 to 19 caused by aging treatment; and
   Fig. 5 is a graph showing the characteristics of copper alloy additively manufactured products of Examples 1 to 6 and 10 to 19 and Comparative Examples 21 to 34 and 41 to 54.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

In this example embodiment, a copper alloy powder for additive manufacturing containing nickel and silicon, and a balance formed from copper and an unavoidable impurity, and a copper alloy additively manufactured product additively manufactured using the copper alloy powder for additive manufacturing will be described.

### <Manufacturing of Copper Alloy Powder for Additive Manufacturing>

The manufacturing method of the copper alloy powder for additive manufacturing according to this example embodiment is not particularly limited. A method of rapidly solidifying powder particles from a molten state, such as a gas atomization method, a water atomization method, a centrifugal atomization method, a plasma atomization method, or a plasma rotating electrode method, is preferably used. From the viewpoint of mass production, the gas atomization method is particularly preferable. The manufactured powder can be classified by a known classifying method under predetermined classifying conditions and adjusted to a copper alloy powder for additive manufacturing with an appropriate grain size. As a classifying apparatus for executing classification, an air flow classifier can suitably be used.

### (Conditions of Metal Contained in Copper Alloy Powder for Additive Manufacturing of This Example Embodiment)

In the Corson alloy that is a precipitation strengthening type copper alloy, nickel and silicon that are in a super-saturated solid solution state in copper as the substrate generate a nickel-silicon intermetallic compound and are precipitated by aging treatment, and the strength of the copper alloy improves.

To obtain a copper alloy additively manufactured product having a high mechanical strength, the content of nickel is preferably 1.5 wt% or more. If the content is less than 1.5 wt%, the precipitation amount in aging treatment is insufficient, and the effect of improving the strength cannot sufficiently be obtained. Note that the solid-solubility limit of Ni₂Si, which is one of nickel-silicon intermetallic compounds in the Corson alloy is said to be about 4.2 wt% for nickel and 1.0 wt% for silicon. However, if a manufacturing method of melting a metal and rapidly solidifying it, like an atomization method, is used as the powder manufacturing method, the nickel-silicon intermetallic compound more than the solid-solubility limit can be contained in the copper substrate.

Also, if an additive manufacturing method such as a powder bed fusion method is used, fusion by a laser or electron beam and rapid solidification are performed in the step. Hence, a manufactured product can be produced without precipitating the nickel-silicon intermetallic compound more than the solid-solubility limit. However, if the content of nickel exceeds 6.0 wt%, the electrical conductivity greatly decreases, although an effect of further improving the mechanical strength can be obtained. For this reason, the content of nickel is preferably 6.0 wt% or less.

Silicon is a major element that generates, together with nickel, a nickel-silicon intermetallic compound which is precipitated, thereby contributing to improving the strength of the copper alloy. If the content of silicon is less than 0.35 wt%, the precipitation amount in aging treatment is insufficient, and the effect of improving the strength cannot sufficiently be obtained. If the content of silicon is more than 1.5 wt%, the electrical conductivity greatly decreases. In addition, a coarse precipitate is generated and this decreases the strength. Hence, it is preferable that the content falls within the range according to this example embodiment.

Nickel and silicon are major elements that generate a nickel-silicon intermetallic compound and contribute to improving the electrical conductivity and the strength. However, in order to improve both the electrical conductivity and the strength, it is necessary to contain nickel and silicon within respective content ranges and in an efficient ratio for forming the nickel-silicon intermetallic compound. As for the ratio, it is preferable that the value obtained by dividing the content (wt%) of nickel by the content (wt%) of silicon falls within a range of 3.3 or more to 7.2 or less. If the ratio exceeds 7.2 and nickel is excessively contained with respect to silicon, the excessive nickel forms a solid solution in the copper substrate, and this greatly decreases the electrical conductivity. On the other hand, if the ratio is less than 3.3 and silicon is excessively contained with respect to nickel, the excessive silicon forms a solid solution in the copper substrate, and this greatly decreases the electrical conductivity.

### (Conditions for Physical Characteristics of Copper Alloy Powder for Additive Manufacturing of This Example Embodiment)

The powder used for additive manufacturing is required to be suitable for the processes of additive manufacturing, such as the step of supplying the powder from a hopper onto a manufacturing stage, the step of forming a powder layer evenly laid in a predetermined thickens, and the step of melting and solidification. Hence, the following conditions are needed. The conditions are a particle size adjusted within an appropriate range, an apparent density within an appropriate range, and the fluidity of the powder that enables supply from the supply hopper and formation of an appropriate powder layer.

The 50% particle size of the copper alloy powder for additive manufacturing means the 50% particle size in the particle size distribution measured by a laser diffraction method, and is preferably included in the range of 3 µm or more to 200 µm or less. If the 50% particle size is less than 3 µm, the fluidity of the powder does not exist, and no powder layer can be formed even by an additive manufacturing apparatus using a laser powder bed fusion method. If a laser is applied to the powder whose 50% particle size is less than 3 µm, the powder and droplets generated by fused powder spatter. Hence, this is unsuitable for additively manufacturing. If the 50% particle size is larger than 100 µm in a case where additive manufacturing is performed by the laser powder bed fusion method, or if the 50% particle size is larger than 200 µm in a case where additive manufacturing is performed by an electron beam powder bed fusion method, the surface of the powder layer is rough, and a powder layer suitable for manufacturing cannot be formed. In addition, a molten pool generated in the powder layer at the time of electron beam irradiation does not reach a solidification layer immediately below, resulting in insufficient melting and solidification. Hence, this is unsuitable for additively manufacturing.

In the laser powder bed fusion method, the 50% particle size is preferably 3 µm or more to 100 µm or less, more preferably 5 µm or more to 75 µm or less, and more preferably 10 µm or more to 45 µm or less. In the electron beam powder bed fusion method, the 50% particle size is preferably 10 µm or more to 200 µm or less, more preferably 25 µm or more to 150 µm or less, and more preferably 45 µm or more to 105 µm or less.

As for the copper alloy powder that can be used for additive manufacturing by an additive manufacturing apparatus, the apparent density (AD) of the copper alloy powder for additive manufacturing measured by the measurement method of JIS Z 2504 complying with ISO 3923-1 needs to be 3.0 g/cm³ or more. If the apparent density is less than 3.0 g/cm³, the powder filling property of a powder layer laid by squeegeeing decreases, and an appropriate powder layer cannot be formed. In addition, since the filling rate of the powder decreases, voids are formed in the manufactured product, and the density of the manufactured product decreases. To obtain a high-density additively manufactured product, the apparent density of the copper alloy powder for additive manufacturing is preferably 3.5 g/cm³ or more.

In the additive manufacturing method, a fluidity is an especially important powder characteristic. In particular, in the powder bed fusion method, the fluidity is the most important powder characteristic directly associated with the quality of a manufactured product in powder supply from the supply hopper, powder supply from a recoater, and formation of a powder layer on the manufacturing stage. In the powder bed fusion method, it is necessary to evenly lay the powder in a predetermined thickness on the manufacturing stage. The step of laying the powder is called squeegeeing, and the laying property of the powder is called a squeegeeing property. The powder used in the additive manufacturing method needs to have a sufficient squeegeeing property, and an appropriate fluidity is thus needed for the powder.

As an index for measuring the fluidity of a metal powder, a flow rate (FR) defined by JIS Z 2502 "Metallic powders - Determination of flow rate" complying with ISO 4490 is used. However, as for a fine powder which is mainly used in the laser powder bed fusion method and has a 50% particle size of 50 µm or less, in some cases, the powder does not flow from a measurement container. For this reason, measurement is impossible, and the fluidity cannot be evaluated. Hence, as an index for evaluating the fluidity of a fine powder, it is effective to use an adhesion of powder, which is obtained by a direct shear testing method of powder bed (to be referred to as a shearing test hereinafter) defined in the standard of The Association of Powder Process Industry and Engineering, JAPAN (SAP15-13: 2013) "Direct shear testing method of powder bed". In the shearing test, a shearing stress generated when a pressure is applied vertically to a powder layer formed by consolidation in the vertical direction, and the powder layer is slid sideways in the horizontal direction in this state is measured, thereby obtaining the adhesion from the obtained yield locus of the powder layer.

In the shearing test, the measurement can be done using, for example, Powder Rheometer FT4 available from Freeman Technology. If the adhesion is 0.600 kPa or less, it can be determined that the copper alloy powder for additive manufacturing has a sufficient fluidity for enabling to lay an even powder layer and a satisfactory squeegeeing property. This can obtain a high-density homogeneous additively manufactured product. If the adhesion is larger than 0.600 kPa, the fluidity of the copper alloy powder for additive manufacturing is not sufficient, the squeegeeing property is poor, and an appropriate powder layer cannot be formed. Hence, in the copper alloy powder for additive manufacturing, the adhesion of the copper alloy powder obtained from the yield locus obtained by the shearing test is preferably 0.600 kPa or less.

### <Manufacturing of Copper Alloy Additively Manufactured Product Using Copper Alloy Powder for Additive Manufacturing of This Example Embodiment>

As a manufacturing method of a copper alloy additively manufactured product, various known metal additive manufacturing techniques can be used. For example, in the powder bed fusion method, steps of laying a metal powder on the manufacturing stage while smoothing it by a blade or a roller to form a powder layer, and irradiating a predetermined position of the formed powder layer with a laser or electron beam to sinter/melt the metal powder are repetitively performed, thereby producing an additively manufactured product. In the manufacturing process of metal additive manufacturing, it is necessary to control a very large number of process parameters to obtain a high-quality manufactured product.

In the laser powder bed fusion method, many scanning conditions such as a laser output and a laser scanning speed exist. Hence, when setting optimum scanning conditions, main parameters are adjusted using an energy density that is an index comprehensively representing the main parameters. Letting P (W) be the laser output, v (mm/s) be the laser scanning speed, s (mm) be the laser scanning pitch, and t (mm) be the thickness of the powder layer, an energy density E (J/mm³) is decided by E = P/(v × s × t). In the laser powder bed fusion method, the energy density is preferably 150 J/mm³ or more to 450 J/mm³ or less. If the energy density is less than 150 J/mm³, an unmolten part or a melting failure occurs in the powder layer, and a defect such as a void occurs in the manufactured product. If the energy density exceeds 450 J/mm³, sputtering occurs to make the surface of the powder layer unstable, and a defect such as a void occurs in the manufactured product.

On the other hand, in the electron beam powder bed fusion method, if negative charges are accumulated in the powder layer to cause charge-up when the powder layer is irradiated with an electron beam, a smoke phenomenon that the powder is thrown up like a fog occurs, resulting in a melting failure. Hence, to prevent the charge-up, a preliminary step of preheating and temporarily sintering the powder layer is necessary. However, if the preheating temperature is too high, sintering progresses to cause necking, and the remaining powder is difficult to remove from the additively manufactured product after manufacturing. Hence, in the copper alloy powder for additive manufacturing, the preheating temperature is preferably set to 300°C or more to 800°C or less.

Note that the metal additive manufacturing technique using the powder bed fusion method has been exemplified here. The general additive manufacturing method of manufacturing an additively manufactured product using the copper alloy powder for additive manufacturing according to this example embodiment is not limited to this, and, for example, an additive manufacturing method using a directed energy deposition method may be employed.

### (Aging Treatment for Copper Alloy Additively Manufactured Product)

When aging treatment is performed for the copper alloy additively manufactured product, nickel and silicon that are in a super-saturated solid solution state are precipitated, the strength of the additively manufactured product improves, and the electrical conductivity improves. Hence, the aging treatment step is an essential step to obtain the high-strength and high-electrical conductivity characteristic of this example embodiment. The aging treatment can be executed by heating the additively manufactured product to a predetermined temperature and holding this for a predetermined time. The aging treatment is preferably performed in a reducing atmosphere, in an inert gas, or in vacuum.

The effect of the aging treatment is determined by the combination of the aging treatment temperature and the aging treatment time. It is therefore important to set appropriate conditions in consideration of the balance between efficiency and a target characteristic. The aging treatment temperature is preferably 450°C or more to 550°C or less. More preferably, the aging treatment temperature is 450°C or more to 500°C or less. To particularly improve the mechanical strength, the aging treatment temperature is preferably set to 500°C. To obtain a particularly high electrical conductivity, the aging treatment temperature can be set to 550°C or more. The aging treatment time is preferably set to 0.5 hrs or more to 3 hrs or less if the aging treatment temperature is 450°C or more.

If the aging treatment time is less than the set time, precipitation of nickel and silicon is insufficient. Also, if the aging treatment time exceeds the set time, overaging occurs, and the precipitated nickel-silicon intermetallic compound become coarse, resulting in decrease of the hardness. If the aging treatment temperature is less than 450°C, it is not practical because a long time is needed to obtain the aging effect. If the aging treatment temperature exceeds 550°C, overaging occurs, and the precipitation phase of the nickel-silicon intermetallic compound becomes coarse, resulting in decrease of the strength.

In the copper alloy additively manufactured product additively manufactured using the copper alloy powder for additive manufacturing according to this example embodiment, thermal strain caused by the rapid fusion and solidification process, which is a feature of an additive manufacturing method, facilitates precipitation of the nickel-silicon intermetallic compound. Therefore, even if the aging treatment temperature is 450°C or more to 550°C or less, and the aging treatment time is about one hour, the electrical conductivity and the mechanical strength can sufficiently be improved.

The Vickers hardness of the copper alloy additively manufactured product of this example embodiment is measured by a method complying with JIS Z 2244 "Vickers hardness test-Test method". The Vickers hardness can be measured using, for example, a micro Vickers hardness tester HMV-G21-DT available from Shimadzu Corporation.

The copper alloy additively manufactured product of this example embodiment has an electrical conductivity of 30%IACS or more. The electrical conductivity can be measured by, for example, an eddy current conductivity meter. An example of the eddy current conductivity meter is a high-performance eddy current conductivity meter SigmaCheck available from Nihon Matech Corporation. Note that IACS (International Annealed Copper Standard) is the electrical conductivity standard defined by setting the electrical conductivity of an internationally adopted annealed standard copper (volume resistivity: 1.7241 × 10⁻² µΩm) as 100%IACS. The electrical conductivity can be adjusted by aging treatment and is preferably appropriately adjusted in consideration of the balance to a desired Vickers hardness. The electrical conductivity is preferably 35%IACS or more, and more preferably 40%IACS or more.

Note that, in a metal, the electrical conductivity and the thermal conductivity almost hold a proportional relationship, and this is known as the Wiedemann-Franz law. Hence, a copper alloy additively manufactured product additively manufactured by an additive manufacturing apparatus using a copper alloy powder for additive manufacturing of this example embodiment has a high electrical conductivity, and can therefore be used as a copper alloy additively manufactured product having a high thermal conductivity.

### [Second Example Embodiment]

In this example embodiment, a copper alloy powder for additive manufacturing containing nickel, silicon, and one or more other metal elements selected from, for example, iron, silver, magnesium, manganese, tin, and zinc, and a balance formed from copper and an unavoidable impurity, and a copper alloy additively manufactured product additively manufactured using the copper alloy powder for additive manufacturing will be described.

The copper alloy powder for additive manufacturing of this example embodiment can contain, in addition to nickel and silicon, one or more elements selected from iron, silver, magnesium, manganese, tin, and zinc, as needed. The effect of containing these metal elements will be described below.
•Containing iron has an effect of miniaturizing the microstructure and improving the strength of the copper alloy additively manufactured product of this example embodiment. Further, iron combines with silicon, thereby forming an iron-silicon compound. Accordingly, the mechanical characteristics and the heat resistance can be improved without great decrease of the electrical conductivity. Iron is preferably adjusted to fall within a range of 0.01 wt% or more to 1.00 wt% or less, and more preferably adjusted to fall within a range of 0.05 wt% or more to 0.30 wt% or less.
•Containing silver is considered to have an effect of improving the electrical conductivity of the copper alloy additively manufactured product of this example embodiment, and an effect of increasing the strength by solid solution strengthening. Further, silver has an effect of rising the chemical potential of nickel, thereby increasing the repulsive interactions among the elements and promoting precipitation of a nickel-silicon intermetallic compound. If the content of silver exceeds 1.0 wt%, the ratio of silver increases, but increasing silver does not provide a significant effect in terms of characteristics. Rather, excessively containing expensive silver leads to an increase in cost. Accordingly, silver is preferably adjusted to fall within a range of 0.01 wt% or more to 1.00 wt% or less, and more preferably adjusted to fall within a range of 0.05 wt% or more to 0.30 wt% or less.
•Containing magnesium has an effect of increasing the strength by solid solution strengthening, and an effect of improving the stress relaxation resistance characteristic. In addition, containing magnesium in a copper alloy has little influence on the electrical conductivity. Further, magnesium has an effect of promoting precipitation of a nickel-silicon intermetallic compound. Magnesium is preferably adjusted to fall within a range of 0.01 wt% or more to 1.00 wt% or less, and more preferably adjusted to fall within a range of 0.05 wt% or more to 0.35 wt% or less.
•When manganese is contained, it acts as an deoxidizer. Manganese combines and forms a compound with oxygen that loses the quality, and thus can suppress the influence of oxygen. Manganese also has an effect of miniaturizing the microstructure and improving the strength. Manganese is preferably adjusted to fall within a range of 0.01 wt% or more to 1.00 wt% or less, and more preferably adjusted to fall within a range of 0.05 wt% or more to 0.20 wt% or less.
•Containing tin and zinc has an effect of increasing the strength by solid solution strengthening. This also has an effect of improving the stress relaxation resistance characteristic, the heat resistance, and the corrosion resistance. However, containing excessive tin and zinc decreases the electrical conductivity. Accordingly, tin is preferably adjusted to fall within a range of 0.01 wt% or more to 1.00 wt% or less, and more preferably adjusted to fall within a range of 0.05 wt% or more to 0.50 wt% or less. Zinc is preferably adjusted to fall within a range of 0.01 wt% or more to 1.00 wt% or less, and more preferably adjusted to fall within a range of 0.05 wt% or more to 0.50 wt% or less.

Note that if the content of iron, silver, magnesium, manganese, tin, and zinc exceeds 1.0 wt%, the electrical conductivity significantly decreases. Accordingly, the total content of these elements is preferably set to 1.0 wt% or less.

### [Third Example Embodiment]

In this example embodiment, characteristic comparison results between a copper alloy additively manufactured product manufactured by additive manufacturing and a copper alloy additively manufactured product manufactured by conventional arc melting or rolling will be described.

It is known that, if a Corson alloy is subjected to, after solution treatment, plastic working such as rolling or forging, that is, severe plastic deformation to apply strain , and then heat treatment to precipitate a fine nickel-silicon intermetallic compound, the Corson alloy can obtain excellent characteristics such as high strength, high electrical conductivity, and high thermal conductivity.

As a manufacturing method of such a Corson alloy, for example, a method is known in which a cast Corson alloy ingot is hot-forged, and then subjected to a solution heat treatment and aging treatment. Also known is a method in which a cast Corson alloy ingot is subjected to blooming and hot finish processing by forging or rolling, then quenched after solution treatment, and then machined and subjected to aging treatment. Also, a method is known in which a cast Corson alloy ingot is hot-worked, annealed, cooled, and then subjected to aging treatment. Furthermore, a method is known in which a cast Corson alloy ingot is subjected to hot forging, cold plastic working after solution treatment, and then aging treatment.

However, since a Corson alloy ingot is cast, plastic working (forging or rolling) and solution treatment are performed, and aging treatment is performed after these processes, there are problems in that the processed shape is limited, and the number of processing steps is large because plastic working (forging or rolling) and solution treatment are necessary for the process.

In this manner, according to this example embodiment, by efficiently generating a Corson alloy containing nickel and silicon, a high-strength copper alloy additive manufacturing product can be manufactured.

Furthermore, according to this example embodiment, by adding other metal elements such as iron, silver, magnesium, manganese, tin, and zinc to nickel and silicon, a copper alloy additive manufacturing product with further improved electrical conductivity and strength can be manufactured.

Furthermore, according to this example embodiment, it is possible to provide, without the need for solution treatment and plastic working processes, a copper alloy powder for additive manufacturing used to manufacture a copper alloy additively manufactured product that achieves high electrical conductivity, high thermal conductivity, and excellent mechanical strength and an additively manufactured copper alloy additively manufactured product.

Furthermore, by additive manufacturing using the copper alloy powder for additive manufacturing of this example embodiment, a copper alloy mold for die casting or plastic molding, an electrode for resistance welding, or the like can be manufactured with high efficiency without the need for solution treatment and plastic working processes while achieving high electrical conductivity, high thermal conductivity, and high strength.

### [Other Example Embodiments]

While the present invention has been particularly shown and described with reference to example embodiments thereof, the present invention is not limited to these example embodiments. It will be understood by those of ordinary skill in the art that various changes in form and details may be made therein without departing from the spirit and scope of the present invention as defined by the claims. A technique including any combination of the individual features included in the respective example embodiments may be incorporated in the scope of the present invention.

### EXAMPLES

The characteristics of the copper alloy powder for additive manufacturing and copper alloy additively manufactured product described in the example embodiment will be described below based on examples and comparative examples as experimental results according to the example embodiment. The following examples and comparative examples are merely detailed examples for facilitating understanding of the technical contents, and the technical scope is not limited by these detailed examples.

### <Examples of Copper Alloy Powder for Additive Manufacturing Containing Nickel and Silicon>

Copper alloy powders for additive manufacturing containing nickel and silicon were manufactured by changing the content of nickel, the content of silicon, and the content ratio thereof. Then, copper alloy additively manufacturing products additively manufacturing using the copper alloy powders for additive manufacturing were manufactured, and their characteristics were measured.

### (Manufacturing of Copper Alloy Powder for Additive Manufacturing and Measurement of Characteristics)

Copper alloy powders for additive manufacturing of copper alloys containing nickel and silicon shown in Table 1 were manufactured by the gas atomization method. The obtained copper alloy powders for additive manufacturing were classified such that the particle size for the laser powder bed fusion method was 10 µm or more to 45 µm or less, and the particle size for the electron beam powder bed fusion method was 45 µm or more to 105 µm or less.

The content of each component element in the obtained copper alloy powders for additive manufacturing was measured by the ICP atomic emission spectrometry method. Also, the apparent density (AD) (g/cm³) of each obtained copper alloy powder for additive manufacturing was measured in accordance with JIS Z 2504. In addition, the flow rate (FR) (sec/50g) of each obtained copper alloy powder for additive manufacturing was measured in accordance with JIS Z 2502. Also, the 50% particle size (D50) (µm) was measured by the laser diffraction method (Microtrac MT3300: available from MicrotracBEL).

A shearing test was conducted using Powder Rheometer FT4 (available from Freeman Technology), and the adhesion (kPa) of each obtained copper alloy powder for additive manufacturing was measured. The squeegeeing property of each obtained copper alloy powder for additive manufacturing was evaluated by actually laying out the powder to be used in the manufacturing test to form a powder layer on the manufacturing stage of a 3D additive manufacturing apparatus (powder sintering additive manufacturing /laser method or electron beam method). The measurement results of characteristics concerning the copper alloy powders for additive manufacturing used in Examples 1 to 6 and Comparative Examples 1 to 12 are shown in Table 1. In Table 1, an underlined value of characteristic indicates a value that does not satisfy the condition range (expected value) as the copper alloy powder for additive manufacturing.

**[Table 1]**

| | Composition | | Ni/Si ratio | Powder characteristics | | | | | Evaluation of manufacturing property |
|---|---|---|---|---|---|---|---|---|---|
| | Element content (wt%) | | | D50 | AD | FR | Adhesion | Squeegeeing property | |
| | Ni | Si | | (µm) | (g/cm³) | (sec/50g) | (kPa) | | |
| Example 1 | 3.72 | 0.88 | 4.23 | 36.4 | 4.79 | 10.9 | 0.311 | ○ | satisfactory |
| Example 2 | 2.99 | 0.69 | 4.33 | 27.7 | 4.96 | none. | 0.461 | ○ | satisfactory |
| Example 3 | 1.60 | 0.39 | 4.10 | 31.2 | 4.93 | 14.7 | 0.402 | ○ | satisfactory |
| Example 4 | 5.09 | 1.09 | 4.67 | 30.8 | 4.81 | 31.2 | 0.417 | ○ | satisfactory |
| Example 5 | 5.98 | 1.32 | 4.53 | 28.5 | 4.88 | none. | 0.465 | ○ | satisfactory |
| Example 6 | 3.72 | 0.88 | 4.23 | 70.8 | 4.81 | 11.3 | 0.336 | ○ | satisfactory |
| Comparative Example 1 | 3.58 | 1.00 | 3.58 | 15.4 | 3.40 | none. | 0.812 | × | unsatisfactory |
| Comparative Example 2 | 3.96 | 0.92 | 4.30 | 2.95 | 2.78 | none. | 1.156 | × | unsatisfactory |
| Comparative Example 3 | 3.87 | 0.92 | 4.21 | 28.8 | 4.15 | none. | 0.615 | × | unsatisfactory |
| Comparative Example 4 | 4.08 | 0.99 | 4.12 | 9.46 | 3.44 | none. | 0.593 | × | unsatisfactory |
| Comparative Example 5 | 6.08 | 1.51 | 4.03 | 33.2 | 4.95 | 38.8 | 0.458 | ○ | satisfactory |
| Comparative Example 6 | 0.98 | 0.19 | 5.16 | 35.1 | 5.02 | none. | 0.510 | ○ | satisfactory |
| Comparative Example 7 | 6.09 | 1.46 | 4.17 | 32.6 | 4.86 | none. | 0.497 | ○ | satisfactory |
| Comparative Example 8 | 1.45 | 0.36 | 4.03 | 30.3 | 4.95 | 25.6 | 0.379 | ○ | satisfactory |
| Comparative Example 9 | 5.85 | 1.55 | 3.77 | 29.8 | 5.11 | 48.5 | 0.469 | ○ | satisfactory |
| Comparative Example 10 | 1.63 | 0.32 | 5.09 | 28.4 | 4.97 | 26.6 | 0.410 | ○ | satisfactory |
| Comparative Example 11 | 4.35 | 0.60 | 7.25 | 29.3 | 5.11 | 41.7 | 0.466 | ○ | satisfactory |
| Comparative Example 12 | 3.49 | 1.06 | 3.29 | 25.5 | 5.03 | none. | 0.499 | ○ | satisfactory |

### (Determination of Squeegeeing Property of Copper Alloy Powder for Additive Manufacturing)

In each of Examples 1 to 6 and Comparative Examples 5 to 12, the squeegeeing property was sufficient so that it was possible to manufacture a satisfactory copper alloy additively manufactured product.

On the other hand, the copper alloy powder in each of Comparative Examples 1 to 4 had a poor squeegeeing property so normal additive manufacturing could not be executed. For example, with the copper alloy powder for additive manufacturing of Comparative Example 1, it was not possible to evenly lay the powder so manufacturing could not be executed. The copper alloy powder of Comparative Example 1 satisfies the conditions of the content of nickel, the content of silicon, the ratio thereof, and the 50% particle size (D50), but does not satisfy the conditions of the apparent density (AD) and the adhesion.

With the copper alloy powder of Comparative Example 2, a powder layer could not be formed. The copper alloy powder of Comparative Example 2 satisfies the conditions of the content of nickel, the content of silicon, and the ratio thereof, but does not satisfy the conditions of the 50% particle size (D50), the apparent density (AD), and the adhesive. In the case of the copper alloy powder of Comparative Example 3, it was possible to spread the powder, but there were many sparse portions in the powder layer. The copper alloy powder of Comparative Example 3 satisfies the conditions of the content of nickel, the content of silicon, the ratio thereof, the 50% particle size (D50), and the apparent density (AD), but does not satisfy the condition for the adhesion. In the copper alloy powder of Comparative Example 4, the powder layer was insufficiently filled and had a low density. The copper alloy powder of Comparative Example 4 satisfies the conditions of the content of nickel, the content of silicon, the ratio thereof, the 50% particle size (D50), and the adhesion, but does not satisfy the condition of the apparent density (AD).

### (Manufacturing of Copper Alloy Additively Manufactured Product Using Copper Alloy Powder for Additive Manufacturing)

Using the copper alloy powder for additive manufacturing in each of Examples 1 to 5 and Comparative Examples 5 to 12, an additively manufactured product to be used in tests was manufactured by a 3D powder additive manufacturing apparatus (SLM280HL available from SLM Solutions GmbH) including an Yb fiber laser with a wavelength of 1,064 nm. Additive manufacturing was performed under the conditions that the additive thickness was 25 µm or more to 50 µm or less, the laser output was 300 W or more to 700 W or less, the scanning speed was 900 mm/sec or more to 1,500 mm/sec or less, and the energy density was 150 J/mm³ or more to 450 J/mm³ or less.

Using the copper alloy powder for additive manufacturing of Example 6, an additively manufactured product to be used in a test was manufactured by a 3D powder additive manufacturing apparatus (ArcamAB, EBM A2X) including an electron beam. Additive manufacturing was performed under the conditions that the additive thickness was 50 µm or more to 100 µm or less, an electron beam voltage was 60 kV, and a preheating temperature was 300°C or more to 700°C or less. In additive manufacturing, a columnar additively manufactured product with a diameter ϕ of 14 mm and a height of 10 mm was manufactured using the 3D powder additive manufacturing apparatus.

### (Measurement of Characteristics of Copper Alloy Additively Manufactured Product)

The relative density (%) of the additively manufactured product manufactured using the copper alloy powder for additive manufacturing of each of Examples 1 to 6 and Comparative Examples 5 to 12 was measured by the Archimedes method using helium gas as a substitution medium (AccuPyc1330 available from Shimadzu Corporation). The measurement results are shown in Table 2.

For each of the copper alloy additively manufactured products of Examples 1 to 6 and Comparative Examples 5 to 12 manufactured by the 3D powder additive manufacturing apparatus, the electrical conductivity (%IACS) was measured using an eddy current conductivity meter (high-performance eddy current conductivity meter SigmaCheck: available from Nihon Matech Corporation). In addition, the Vickers hardness (Hv) of the copper alloy additively manufactured product was measured using a micro Vickers hardness tester (micro Vickers hardness tester HMV-G21-DT: available from Shimadzu Corporation).

For the produced copper alloy additively manufactured products, aging treatment was performed in an inert atmosphere for 1 hr at a temperature set to 400°C, 500°C, 600°C, or 700°C. The electrical conductivity of the copper alloy additively manufactured product, which underwent the aging treatment, was measured by the eddy current conductivity meter. In addition, the Vickers hardness was measured by the micro Vickers hardness tester. For the additively manufactured products of Examples 1 to 6 and Comparative Examples 5 to 12 manufactured by the 3D powder additive manufacturing apparatus, the evaluation results of various kinds of characteristics are shown in Table 2. In Table 2, a value of characteristic surrounded by a thick frame indicates a value that satisfies the condition range as the copper alloy additively manufactured product. An underlined value of characteristic indicates a value that does not satisfy the condition range as the copper alloy additively manufactured product even in the aging treatment at 500°C and a value that does not satisfies the condition range as the copper alloy powder for additive manufacturing.

**[Table 2]**

| | Manufacturing method | Composition | | Ni/Si ratio | Electrical conductivity (%IACS) | | | | | Vickers hardness (Hv) | | | | | Relative density |
|---|---|---|---|---|---|---|---|---|---|---|---|---|---|---|---|
| | | Element content (wt%) | | | no aging treatment | 400°C × 1h | 500°C × 1h | 600°C × 1h | 700°C × 1h | no aging treatment | 400°C × 1h | 500°C × 1h | 600°C × 1h | 700°C × 1h | (%) |
| | | Ni | Si | | | | | | | | | | | | |
| Example 1 | additive manufacturing | 3.72 | 0.88 | 4.23 | 15.4 | 25.5 | 43.1 | 42.5 | 36.0 | 120.4 | 224.5 | 289.2 | 192.8 | 133.4 | 99.7 |
| Example 2 | additive manufacturing | 2.99 | 0.69 | 4.33 | 17.0 | 26.3 | 43.6 | 43.1 | 32.2 | 110.5 | 191.1 | 275.2 | 178.8 | 122.9 | 99.5 |
| Example 3 | additive manufacturing | 1.60 | 0.39 | 4.10 | 23.3 | 35.4 | 44.3 | 43.6 | 31.7 | 84.9 | 151.4 | 200.0 | 122.9 | 88.5 | 99.2 |
| Example 4 | additive manufacturing | 5.09 | 1.09 | 4.67 | 13.6 | 22.3 | 34.6 | 32.8 | 28.1 | 137.5 | 207.0 | 284.9 | 185.0 | 137.2 | 99.6 |
| Example 5 | additive manufacturing | 5.98 | 1.32 | 4.53 | 10.6 | *15.5* | 30.6 | 26.9 | 22.5 | 146.0 | 209.7 | 296.8 | 192.7 | 138.4 | 99.5 |
| Example 6 | additive manufacturing | 3.72 | 0.88 | 4.23 | 15.4 | 24.3 | 44.3 | 43.6 | 38.9 | 122.0 | 215.3 | 282.1 | 203.8 | 135.6 | 99.7 |
| Comparative Example 5 | additive manufacturing | 6.08 | 1.51 | 4.03 | 10.3 | 14.8 | 29.5 | 25.8 | 21.3 | 145.0 | 214.2 | 303.5 | 203.5 | 138.9 | 99.6 |
| Comparative Example 6 | additive manufacturing | 0.98 | 0.19 | 5.16 | 28.7 | 36.3 | 49.7 | 36.1 | 32.8 | 69.8 | 148.1 | 166.1 | 82.5 | 75.9 | 99.0 |
| Comparative Example 7 | additive manufacturing | 6.09 | 1.46 | 4.17 | 10.2 | 14.5 | 28.8 | 25.1 | 20.6 | 140.4 | 210.1 | 283.5 | 191.1 | 138.9 | 99.5 |
| Comparative Example 8 | additive manufacturing | 1.45 | 0.36 | 4.03 | 24.5 | 37.1 | 45.6 | 42.9 | 32.4 | 74.7 | 148.1 | 189.5 | 114.9 | 82.9 | 99.1 |
| Comparative Example 9 | additive manufacturing | 5.85 | 1.55 | 3.77 | 10.2 | 15.0 | 28.9 | 24.9 | 19.8 | 149.8 | 229.0 | 287.8 | 192.3 | 136.0 | 99.6 |
| Comparative Example 10 | additive manufacturing | 1.63 | 0.32 | 5.09 | 22.7 | 34.3 | 44.7 | 40.1 | 29.8 | 76.8 | 146.5 | 188.8 | 115.9 | 84.2 | 99.0 |
| Comparative Example 11 | additive manufacturing | 4.35 | 0.60 | 7.25 | 15.3 | 23.1 | 29.6 | 28.9 | 24.4 | 114.8 | 177.7 | 225.9 | 159.2 | 115.9 | 99.4 |
| Comparative Example 12 | additive manufacturing | 3.49 | 1.06 | 3.29 | 15.2 | 24.4 | 29.4 | 27.5 | 23.4 | 129.2 | 235.3 | 245.2 | 165.6 | 113.7 | 99.1 |

In each of Examples 1 to 6, the copper alloy powder for additive manufacturing satisfies the condition ranges of the content of nickel, the content of silicon, the ratio thereof, and the characteristics, so that it was possible to manufacture a copper alloy additively manufacturing product having sufficient electrical conductivity (30% IACS or more) and strength (Vickers hardness: 200 Hv or more) by predetermined aging treatment.

On the other hand, in Comparative Example 5, the content of nickel and the content of silicon were excessive and outside the condition ranges, so that the Vickers hardness is high but the electrical conductivity was low. In Comparative Example 6, the content of nickel and the content silicon were too low and outside the condition ranges, so that the electrical conductivity was high but the Vickers hardness was low. In Comparative Example 7, the content of nickel was excessive, and in Comparative Example 9, the content of silicon was excessive, so that the Vickers hardness was high but the electrical conductivity was low in each case. In Comparative Example 8, the content of nickel was too low, and in Comparative Example 10, the content of silicon was too low, so that the electrical conductivity was high but the Vickers hardness was low in each case.

Regarding the value (ratio) obtained by dividing the content (wt%) of nickel by the content (wt%) of silicon, the value exceeded 7.2 in Comparative Example 11, and the value was below 3.3 in Comparative Example 12. Hence, the Vickers hardness was high but the electrical conductivity was low in each case.

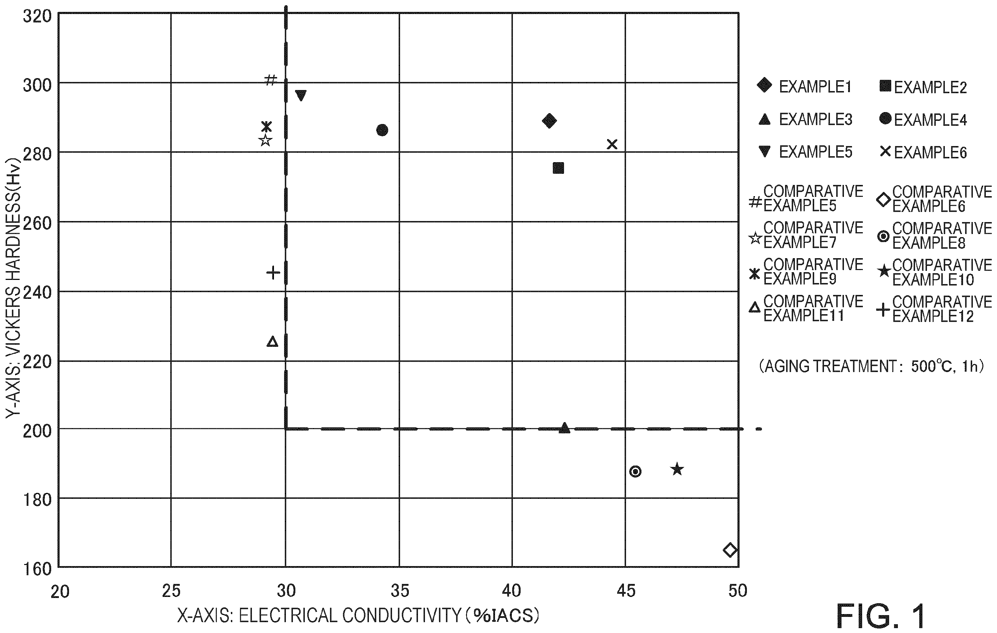

Fig. 1 is a graph plotting the characteristics of Examples 1 to 6 and Comparative Examples 5 to 12 with the electrical conductivity (%IACS) after aging treatment at 500°C on the X-axis and the Vickers hardness (Hv) on the Y-axis.

It is clear that while the electrical conductivity and Vickers hardness of the copper alloy additively manufactured product of each of Examples 1 to 6 satisfy the condition ranges, the electrical conductivity and Vickers hardness of the copper alloy additively manufactured product of each of Comparative Examples 5 to 12 do not satisfy the condition ranges.

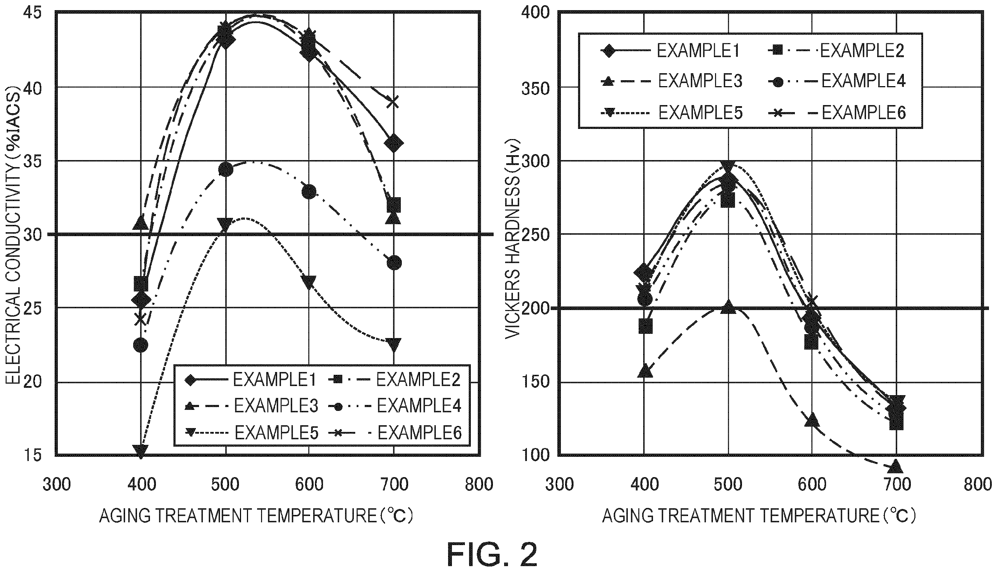

Fig. 2 includes graphs each plotting one of the characteristics of electrical conductivity (%IACS) and Vickers hardness (Hv) when the aging treatment temperature was changed from 400°C to 700°C in Examples 1 to 6.

It can be seen that the range of aging treatment temperature in Examples 1 to 6 is desirably 450°C or more to 550°C or less, preferably 550°C when it is desired to increase the electrical conductivity, and preferably 500°C when it is desired to increase the Vickers hardness.

### <Examples of Copper Alloy Powder for Additive Manufacturing Containing Nickel, Silicon, and Other Metal Elements>

Copper alloy powders for additive manufacturing were manufactured by changing the content of nickel, the content of silicon, the content ratio thereof, and the contents of other metal elements. Then, copper alloy additively manufactured products additively manufacturing using the copper alloy powders for additive manufacturing were manufactured, and their characteristics were measured.

### (Manufacturing of Copper Alloy Powder for Additive Manufacturing and Measurement of Characteristics)

Copper alloy powders for additive manufacturing of copper alloys containing nickel, silicon, and other metal elements shown in Table 3 were manufactured by the gas atomization method. The obtained copper alloy powders for additive manufacturing were classified such that the particle size for the laser powder bed fusion method was 10 µm or more to 45 µm or less, and the particle size for the electron beam powder bed fusion method was 45 µm or more to 105 µm or less.

The content of each component element in the obtained copper alloy powders for additive manufacturing was measured by the ICP atomic emission spectrometry method. Also, the apparent density (AD) (g/cm³) of each obtained copper alloy powder for additive manufacturing was measured in accordance with JIS Z 2504. In addition, the flow rate (FR) (sec/50g) of each obtained copper alloy powder for additive manufacturing was measured in accordance with JIS Z 2502. Also, the 50% particle size (D50) (µm) was measured by the laser diffraction method (Microtrac MT3300: available from MicrotracBEL).

A shearing test was conducted using Powder Rheometer FT4 (available from Freeman Technology), and the adhesion (kPa) of each obtained copper alloy powder for additive manufacturing was measured. The squeegeeing property of each obtained copper alloy powder for additive manufacturing was evaluated by actually laying out the powder to be used in the manufacturing test to form a powder layer on the manufacturing stage of a 3D additive manufacturing apparatus (powder sintering additive manufacturing /laser method or electron beam method). The measurement results of characteristics concerning the copper alloy powders for additive manufacturing used in Examples 10 to 19 are shown in Table 3.

**[Table 3]**

| | Composition | | | | | | | | Ni/Si ratio | Powder characteristics | | | | | Evaluation of manufacturing property |
|---|---|---|---|---|---|---|---|---|---|---|---|---|---|---|---|
| | Element content (wt%) | | | | | | | | | D50 | AD | FR | Adhesion | Squeegeeing property | |
| | Ni | Si | Fe | Ag | Mg | Mn | Sn | Zn | | (µm) | (g/cm³) | (sec/50g) | (kPa) | | |
| Example 10 | 4.05 | 0.99 | 0.12 | - | - | - | - | - | 4.09 | 29.8 | 5.08 | 30.9 | 0.426 | ○ | satisfactory |
| Example 11 | 4.08 | 0.97 | 0.23 | - | - | - | - | - | 4.21 | 31.0 | 5.07 | 18.7 | 0.364 | ○ | satisfactory |
| Example 12 | 3.29 | 0.80 | 0.13 | - | - | - | - | - | 4.11 | 29.6 | 5.04 | 28.1 | 0.415 | ○ | satisfactory |
| Example 13 | 1.70 | 0.50 | 0.07 | - | - | - | - | - | 3.40 | 31.1 | 5.10 | 23.2 | 0.395 | ○ | satisfactory |
| Example 14 | 4.05 | 0.99 | 0.12 | - | - | - | - | - | 4.09 | 73.5 | 4.88 | 10.8 | 0.311 | ○ | satisfactory |
| Example 15 | 3.67 | 0.90 | - | 0.10 | - | - | - | - | 4.08 | 31.2 | 4.92 | 13.5 | 0.332 | ○ | satisfactory |
| Example 16 | 3.76 | 0.82 | - | 0.19 | - | - | - | - | 4.59 | 32.3 | 4.94 | 31.6 | 0.446 | ○ | satisfactory |
| Example 17 | 3.18 | 0.69 | - | - | 0.13 | - | - | - | 4.61 | 23.9 | 5.13 | none. | 0.531 | ○ | satisfactory |
| Example 18 | 3.74 | 0.79 | - | - | 0.10 | 0.13 | - | - | 4.73 | 35.4 | 4.93 | 12.2 | 0.339 | ○ | satisfactory |
| Example 19 | 1.65 | 0.41 | - | - | - | - | 0.38 | 0.47 | 4.02 | 27.7 | 4.88 | 19.2 | 0.391 | ○ | satisfactory |

### (Manufacturing of Copper Alloy Additively Manufactured Product Using Copper Alloy Powder for Additive Manufacturing)

Using the copper alloy powder for additive manufacturing in each of Examples 10 to 13 and 15 to 19, an additively manufactured product to be used in tests was manufactured by a 3D powder additive manufacturing apparatus (SLM280HL available from SLM Solutions GmbH) including an Yb fiber laser with a wavelength of 1,064 nm. Additive manufacturing was performed under the conditions that the additive thickness was 25 µm or more to 50 µm or less, the laser output was 300 W or more to 700 W or less, the scanning speed was 900 mm/sec or more to 1,500 mm/sec or less, and the energy density was 150 J/mm³ or more to 450 J/mm³ or less.

Using the copper alloy powder for additive manufacturing of Example 14, an additively manufactured product to be used in a test was manufactured by a 3D powder additive manufacturing apparatus (ArcamAB, EBM A2X) including an electron beam. Additive manufacturing was performed under the conditions that the additive thickness was 50 µm or more to 100 µm or less, an electron beam voltage was 60 kV, and a preheating temperature was 300°C or more to 700°C or less. In additive manufacturing, a columnar additively manufactured product with a diameter ϕ of 14 mm and a height of 10 mm was manufactured using the 3D powder additive manufacturing apparatus.

### (Measurement of Characteristics of Copper Alloy Additively Manufactured Product)

The relative density (%) of the additively manufactured product manufactured using the copper alloy powder for additive manufacturing of each of Examples 10 to 19 was measured by the Archimedes method using helium gas as a substitution medium (AccuPyc1330 available from Shimadzu Corporation). The measurement results are shown in Table 4.

For each of the copper alloy additively manufactured products of Examples 10 to 19 manufactured by the 3D powder additive manufacturing apparatus, the electrical conductivity (%IACS) was measured using an eddy current conductivity meter (high-performance eddy current conductivity meter SigmaCheck: available from Nihon Matech Corporation). In addition, the Vickers hardness (Hv) of the copper alloy additively manufactured product was measured using a micro Vickers hardness tester (micro Vickers hardness tester HMV-G21-DT: available from Shimadzu Corporation).

For the produced copper alloy additively manufactured products, aging treatment was performed in an inert atmosphere for 1 hr at a temperature set to 400°C, 500°C, 600°C, or 700°C. The electrical conductivity of the copper alloy additively manufactured product, which underwent the aging treatment, was measured by the eddy current conductivity meter. In addition, the Vickers hardness was measured by the micro Vickers hardness tester. For the additively manufactured products of Examples 10 to 19 manufactured by the 3D powder additive manufacturing apparatus, the evaluation results of various kinds of characteristics are shown in Table 4. In Table 4, a value of characteristic surrounded by a thick frame indicates a value that satisfies the condition range as the copper alloy additively manufactured product.

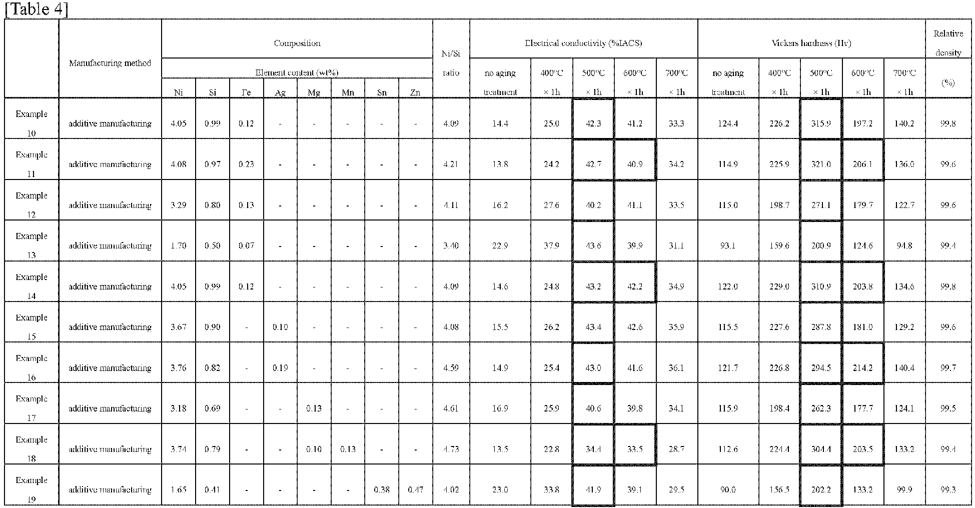

In each of Examples 10 to 19, the copper alloy powder for additive manufacturing satisfies the condition ranges of the content of nickel, the content of silicon, the ratio thereof, and the characteristics, so that it was possible to manufacture a copper alloy additively manufacturing product having sufficient electrical conductivity (30% IACS or more) and strength (Vickers hardness: 200 Hv or more) by predetermined aging treatment.

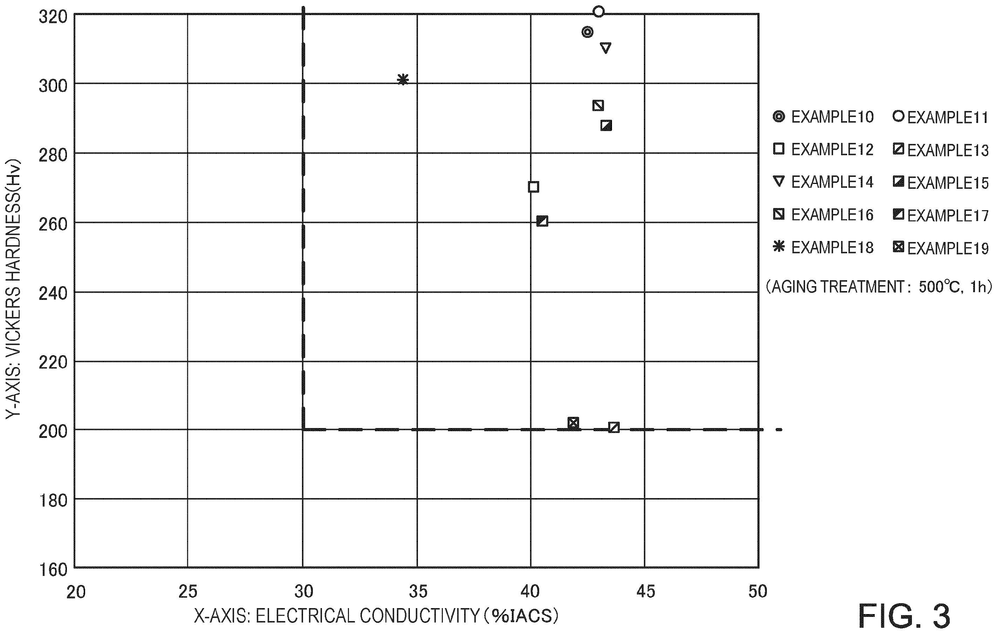

Fig. 3 is a graph plotting the characteristics of Examples 10 to 19 with the electrical conductivity (%IACS) after aging treatment at 500°C on the X-axis and the Vickers hardness (Hv) on the Y-axis.

It is clear that the electrical conductivity and Vickers hardness of the copper alloy additively manufactured product of each of Examples 10 to 19 satisfy the condition ranges.

Examples 10 and 11, which are copper alloy additively manufactured products containing nickel, silicon, and iron, have the greatly improved Vickers hardness regardless of the aging temperature treatment while suppressing a decrease in electrical conductivity, as compared to Example 1, which is a copper alloy additively manufactured product containing equivalent amounts of nickel and silicon but no iron.

Example 15, which is a copper alloy additively manufactured product containing nickel, silicon, and silver, has approximately the equivalent Vickers hardness but the improved electrical conductivity, as compared to Example 1, which is a copper alloy additively manufactured product containing equivalent amounts of nickel and silicon but no silver. In Example 16, the electrical conductivity is maintained at an equivalent value but the Vickers hardness is improved.

Example 17, which is a copper alloy additively manufactured product containing nickel, silicon, and magnesium, has the improved Vickers hardness while suppressing a decrease in electrical conductivity, as compared to Example 2, which is a copper alloy additively manufactured product containing equivalent amounts of nickel and silicon but no magnesium.

Example 18, which is a copper alloy additively manufactured product containing nickel, silicon, magnesium, and manganese, has the greatly improved Vickers hardness after aging treatment at 500°C, as compared to Example 1, which is a copper alloy additively manufactured product containing equivalent amounts of nickel and silicon but no magnesium or manganese.

Example 19, which is a copper alloy additively manufactured product containing nickel, silicon, tin, and zinc, has the improved Vickers hardness regardless of the heat treatment conditions, as compared to Example 3, which is a copper alloy additively manufactured product containing equivalent amounts of nickel and silicon but no tin or zinc.

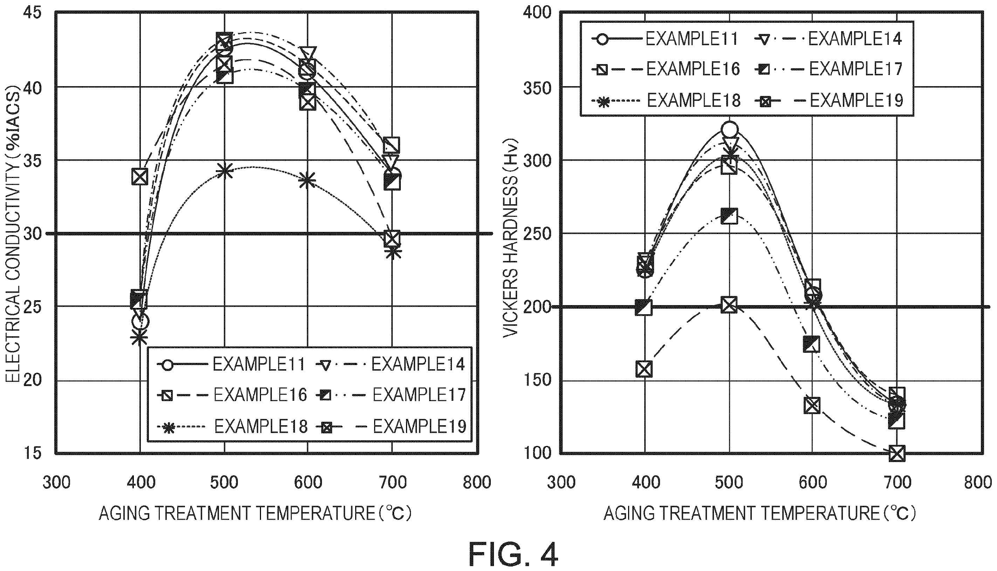

Fig. 4 includes graphs each plotting one of the characteristics of electrical conductivity (%IACS) and Vickers hardness (Hv) when the aging treatment temperature was changed from 400°C to 700°C in Examples 10 to 19.

It can be seen that the range of aging treatment temperature in Examples 10 to 19 is desirably 450°C or more to 550°C or less, preferably 550°C when it is desired to increase the electrical conductivity, and preferably 500°C when it is desired to increase the Vickers hardness.

### <Comparative Example of Copper Alloy Manufactured Product Containing Nickel and Silicon by Arc Melting or Rolling>

### (Arc-melted material)

In order to compare the characteristics of a copper alloy (Corson alloy) produced using a conventional manufacturing method in which a cast Corson alloy ingot is subjected to plastic working and solution treatment with the characteristics of the copper alloy additively manufactured products of Examples 1 to 6 and 10 to 19, the characteristics of the Corson alloy produced by the conventional method were evaluated using the following method. As an alternative to the cast material manufacturing method, an arc melting method as a known molten material manufacturing method was used.

Arc melting was performed using each of the copper alloy powders for additive manufacturing similar to those of Examples 1 to 5, 10 to 13, and 15 to 19 to produce an arc-melted material. The arc-melted materials were produced in the following way. First, the copper alloy powders for additive manufacturing used in Examples 1 to 5, 10 to 13, and 15 to 19 were press-formed to produce green compacts. The produced green compacts were arc-melted in an argon atmosphere using a vacuum arc melting furnace available from Nissin Giken Corporation, thereby producing arc-melted materials. These arc-melted materials were defined as Comparative Examples 21 to 34. Note that, since Example 6 has the same composition as Example 1, and Example 14 has the same composition as Example 10, arc-melted materials using copper alloy powders for additive manufacturing similar to those used in Examples 6 and 14 were not produced.

For the arc-melted materials of Comparative Examples 21 to 34 produced by arc melting, the electrical conductivity (%IACS) was measured using an eddy current conductivity meter (high-performance eddy current conductivity meter SigmaCheck: available from Nihon Matech Corporation). In addition, the Vickers hardness (Hv) was measured using a micro Vickers hardness tester (micro Vickers hardness tester HMV-G21-DT: available from Shimadzu Corporation).

For the produced arc-melted materials, aging treatment was performed in an inert atmosphere for 1 hr at a temperature set to 400°C, 500°C, 600°C, or 700°C. The electrical conductivity of the arc-melted material, which underwent the aging treatment, was measured by the eddy current conductivity meter. In addition, the Vickers hardness was measured by the micro Vickers hardness tester.

For the arc-melted materials of Comparative Examples 21 to 34, the evaluation results of various kinds of characteristics are shown in Table 5. In Table 5, an underlined value of characteristic indicates a value that does not satisfy the condition range as a copper alloy manufactured product even in the aging treatment at 500°C.

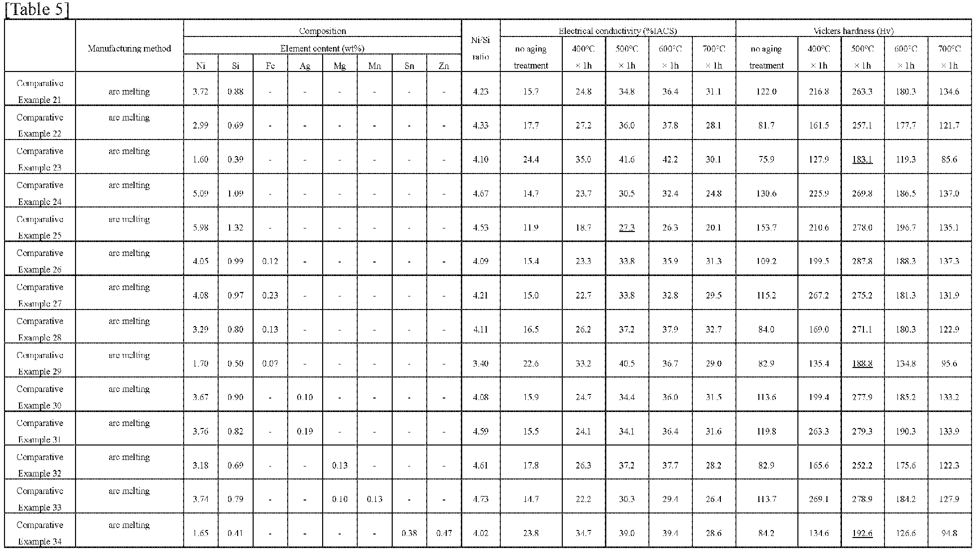

### (Rolled Arc-melted Material)

Next, the obtained arc-melted materials of Comparative Examples 21 to 34 were subjected to plastic working by rolling at a processing rate of 50% using a rolling machine. For each rolled product, solution treatment was performed in an inert atmosphere for 1 hr at a temperature set to 950°C. The arc-melted materials having undergone the rolling were defined as Comparative Examples 41 to 54.

For the arc-melted materials of Comparative Examples 41 to 54 obtained by rolling the arc-melted materials of Comparative Examples 21 to 34, the electrical conductivity (%IACS) was measured using an eddy current conductivity meter (high-performance eddy current conductivity meter SigmaCheck: available from Nihon Matech Corporation). In addition, the Vickers hardness (Hv) was measured using a micro Vickers hardness tester (micro Vickers hardness tester HMV-G21-DT: available from Shimadzu Corporation).

For the rolled arc-melted materials, aging treatment was performed in an inert atmosphere for 1 hr at a temperature set to 400°C, 500°C, 600°C, or 700°C. The electrical conductivity of the rolled arc-melted material, which underwent the aging treatment, was measured by the eddy current conductivity meter. In addition, the Vickers hardness was measured by the micro Vickers hardness tester.

For the rolled arc-melted materials of Comparative Examples 41 to 54, the evaluation results of various kinds of characteristics are shown in Table 6. In Table 6, an underlined value of characteristic indicates a value that does not satisfy the condition range as a copper alloy manufactured product even in the aging treatment at 500°C.

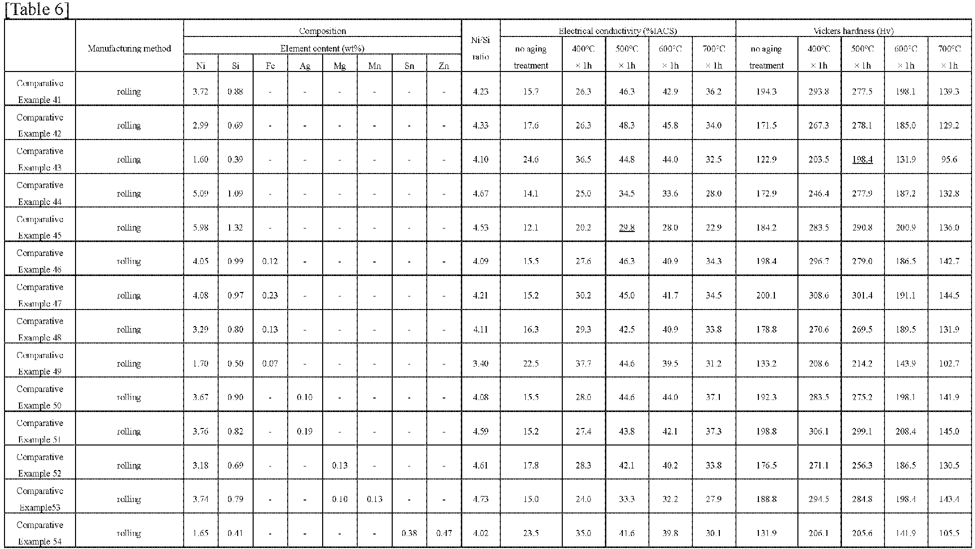

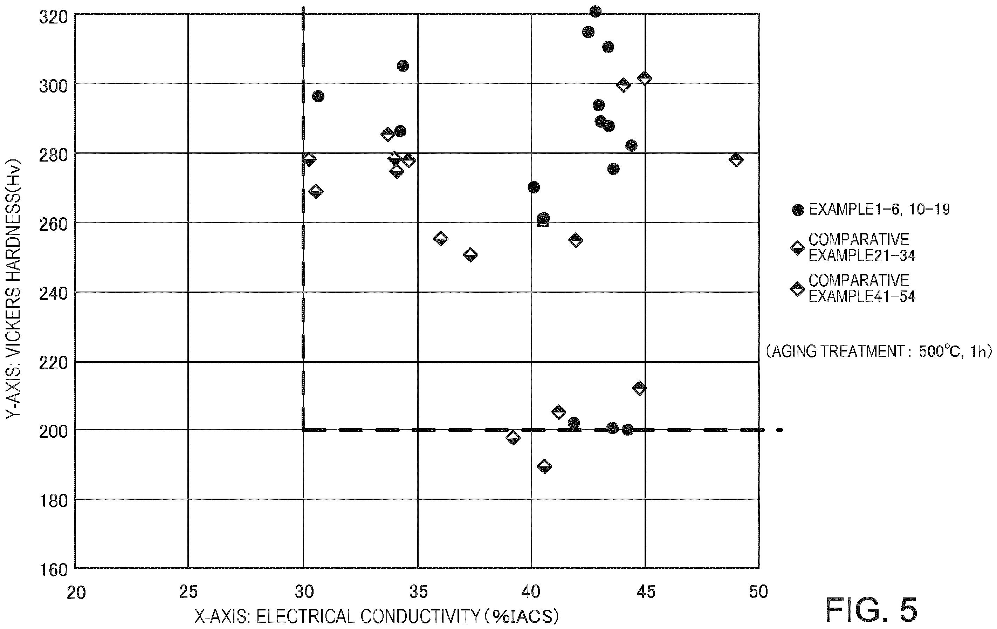

Fig. 5 is a graph plotting the characteristics of the copper alloy additively manufactured products of Examples 1 to 6 and 10 to 19, the characteristics of the arc-melted materials of Comparative Examples 21 to 34, and the characteristics of the rolled arc-melted materials of Comparative Examples 41 to 54 in the aging treatment at 500°C with the electrical conductivity (%IACS) on the X-axis and the Vickers hardness (Hv) on the Y-axis.

Since the arc-melted materials of Comparative Examples 21 to 34 were not subjected to, after solution treatment, severe plastic deformation to apply strain , even after the heat treatment, their characteristics were inferior to those of Examples 1 to 6 and 10 to 19. The copper alloy additively manufactured products of Examples 1 to 6 and 10 to 19 can achieve the characteristics that compare favorably with the characteristics of the rolled arc-melted materials of Comparative Examples 41 to 54 produced using the conventional manufacturing method.

From the above, it was confirmed that, according to Examples 1 to 6 and 10 to 19, it is possible to provide, without the need for solution treatment and plastic working processes, a copper alloy powder for additive manufacturing and a copper alloy additively manufactured product that achieve high electrical conductivity (thermal conductivity) and excellent mechanical strength.

## Claims

1. A copper alloy powder for additive manufacturing used to manufacture an additively manufactured product by an additive manufacturing method, wherein
the copper alloy powder contains nickel and silicon, and a balance is formed from copper and an unavoidable impurity, and
a value obtained by dividing a content (wt%) of the nickel by a content (wt%) of the silicon is not less than 3.3 and not more than 7.2.

2. The copper alloy powder for additive manufacturing according to claim 1, wherein the copper alloy powder for additive manufacturing contains not less than 1.5 wt% to not more than 6.0 wt% of the nickel.

3. The copper alloy powder for additive manufacturing according to claim 2, wherein the copper alloy powder for additive manufacturing contains not less than 0.35 wt% to not more than 1.5 wt% of the silicon.

4. The copper alloy powder for additive manufacturing according to any one of claims 1 to 3, wherein a 50% particle size is not less than 3 µm to not more than 200 µm.

5. The copper alloy powder for additive manufacturing according any one of claims 1 to 3, wherein an apparent density of the powder measured by a measurement method of JIS Z 2504 (ISO 3923-1) is not less than 3.5 g/cm³.

6. The copper alloy powder for additive manufacturing according to any one of claims 1 to 3, wherein an adhesion of the copper alloy powder obtained from a yield locus obtained by a shearing test is not more than 0.600 kPa.

7. The copper alloy powder for additive manufacturing according to any one of claims 1 to 3, wherein the copper alloy powder for additive manufacturing further contains at least one element selected from iron, silver, magnesium, manganese, tin, and zinc up to 1.0 wt% in total (excluding a case where iron, silver, magnesium, manganese, tin, and zinc are 0 wt%).

8. A copper alloy additively manufactured product additively manufactured by an additive manufacturing apparatus using a copper alloy powder for additive manufacturing defined in claim 1, wherein
a value obtained by dividing a content (wt%) of nickel by a content (wt%) of silicon is not less than 3.3 and not more than 7.2.

9. A copper alloy additively manufactured product additively manufactured by an additive manufacturing apparatus using a copper alloy powder for additive manufacturing defined in claim 3, wherein
a value obtained by dividing a content (wt%) of nickel by a content (wt%) of silicon is not less than 3.3 and not more than 7.2, and
the copper alloy additively manufactured product contains not less than 1.5 wt% to not more than 6.0 wt% of the nickel and not less than 0.35 wt% to not more than 1.5 wt% of the silicon, and a balance is formed from copper and an unavoidable impurity.

10. The copper alloy additively manufactured product according to claim 8 or 9, wherein the copper alloy additively manufactured product has an electrical conductivity of not less than 30%IACS, and a Vickers hardness of not less than 200 Hv.

11. A copper alloy additively manufactured product additively manufactured by an additive manufacturing apparatus using a copper alloy powder for additive manufacturing defined in claim 7, wherein
a value obtained by dividing a content (wt%) of nickel by a content (wt%) of silicon is not less than 3.3 and not more than 7.2, and
the copper alloy additively manufactured product contains not less than 1.5 wt% to not more than 6.0 wt% of the nickel, not less than 0.35 wt% to not more than 1.5 wt% of the silicon, and at least one element selected from iron, silver, magnesium, manganese, tin, and zinc up to 1.0 wt% in total (excluding a case where iron, silver, magnesium, manganese, tin, and zinc are 0 wt%), and a balance is formed from copper and an unavoidable impurity.

12. The copper alloy additively manufactured product according to claim 11, wherein the copper alloy additively manufactured product has an electrical conductivity of not less than 30%IACS, and a Vickers hardness of not less than 200 Hv.

13. A manufacturing method of a copper alloy additively manufactured product, comprising:
additively manufacturing a copper alloy additively manufactured product by an additive manufacturing apparatus using a copper alloy powder for additive manufacturing defined in any one of claims 1 to 3; and
holding the copper alloy additively manufactured product at not less than 450°C to not more than 550°C.
